# EUROPÄISCHE PATENTANMELDUNG

(11) **EP 1 035 077 A1**
(43) Veröffentlichungstag der Anmeldung: **13.09.2000**
(21) Anmeldenummer: 00104874.3
(22) Anmeldetag: 07.03.2000
(51) Int. Cl.: C02F 11/14, C02F 11/12

(54) **Verfahren sowie Anlage zum Entwässern von Schlamm**

(30) Priorität: 09.03.1999 DE 19910298
(71) Anmelder: Alb. Klein Umwelttechnik GmbH, 57572 Niederfischbach (DE)
(72) Erfinder: Dörner, Manfred, 57520 Harbach (DE)
(74) Vertreter: Hiebsch, Gerhard F., Dipl.-Ing.

(57) **Zusammenfassung**

Bei einem Verfahren zum Entwässern von Schlamm -- insbesondere von Abwasser- oder Klärschlamm -- wird dem Schlamm in einer Mischzone (14) Flockungsmittel (22) zugesetzt und der geflockte Schlamm anschließend entwässert; nach dem Flockungsvorgang in der Mischzone (14) und einem Vorentwässern (24) des der Mischzone entnommenen Schlammes wird diesem in zumindest einer weiteren Mischzone (14a) erneut Flockungsmittel (20a) zudosiert, wonach der so behandelte Dickschlamm in der Druckzone oder Entwässerungseinrichtung (32) druckentwässert wird. Zudem soll dem Dickschlamm nach der weiteren Mischzone und vor Eintritt in die Entwässerungseinrichtung klares Wasser entzogen werden.

## Beschreibung

Die Erfindung betrifft ein Verfahren sowie eine Anlage zum Entwässern von Schlamm -- insbesondere von Abwasser- oder Klärschlamm --, bei welchem/welcher dem Schlamm in einer Mischzone Flockungsmittel zugesetzt und der geflockte Schlamm anschließend entwässert wird.

Zum Entwässern von Klärschlämmen auf Siebbandpressen, Zentrifugen, Kammerfilterpressen oder anderen Entwässerungssystemen ist eine vorherige Flockung des zu entwässernden Schlammes erforderlich, um eine Feststoff-/Flüssigkeits-Trennung zu erreichen.

Bei einem derartigen Flockungsvorgang wird dem Schlamm in einer Mischzone ein den Schlammfeststoffen entgegengesetzt geladenes Polyelektrolyt zugegeben, in aller Regel eine Chemikalie auf Polyacrylamidbasis. Dabei lagern sich die Schlammfeststoffe, die sich normalerweise wegen ihrer gleichnamigen elektrischen Ladung gleichmäßig im Schlammwasser verteilen, an den gegensätzlich geladenen Makromolekülen des zudosierten Polyelektrolyten an. Es bilden sich Wolken oder Flocken von 2 bis 20 mm Durchmesser, die im klaren Wasser schwimmen.

Während eines nachfolgenden Entwässerungsvorganges wird das klare Wasser entweder durch Schwerkraft in einer Seihzone abgetrennt oder in einer Zentrifuge od.dgl. Geräten dekantiert. Die verbleibende kompakte Masse wird dann durch Aufbringen von Druck und/oder Scherkräften in einer Siebbandpresse, Kammerfilterpresse od.dgl. Vorrichtung, gegebenenfalls auch in einer Zentrifuge, zu einem stichfesten und transportfähigen Filterkuchen entwässert. Je nach Schlammart können durch die Entwässerung Feststoffgehalte zwischen 15 und 40 Gew.-% im Filterkuchen erreicht werden.

In Kenntnis dieses Standes der Technik hat sich der Erfinder das Ziel gesetzt, das eingangs genannte Verfahren sowie eine dafür geeignete Anlage effizienter zu gestalten und den Entwässerungsgrad merkbar anzuheben.

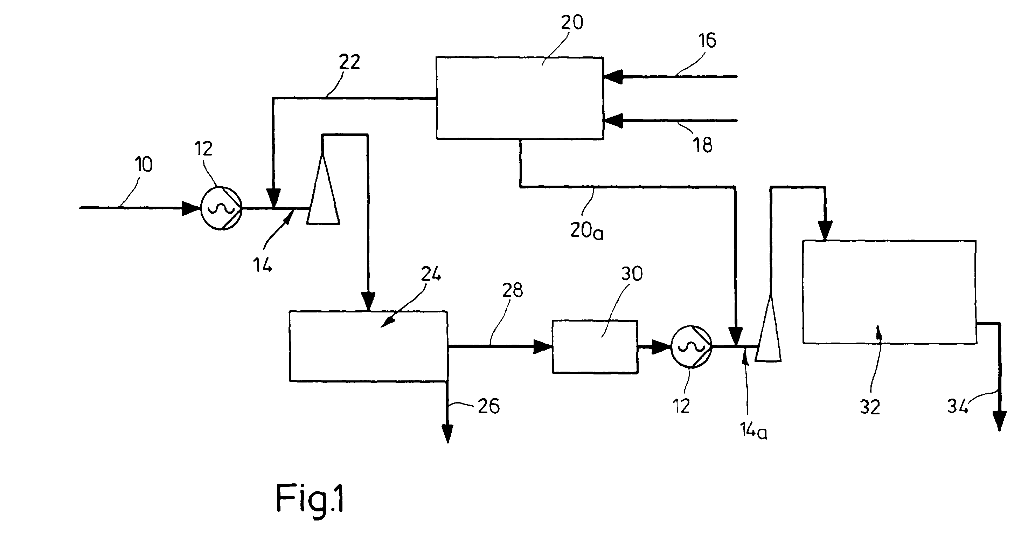

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß wird nach dem beschriebenen Flockungsvorgang in der Mischzone und einem Vorentwässern des der Mischzone entnommenen Schlammes diesem in -- zumindest -- einer weiteren Mischzone nochmals Flockungsmittel zudosiert, wonach der so behandelte Dickschlamm in der Entwässerungseinrichtung entwässert wird. Durch den zweiten Flockungsvorgang vor der eigentlichen Druckentwässerung wird erfindungsgemäß der Feststoffgehalt im Filterkuchen um 5 bis 10 Gew.-% gegenüber dem bisherigen Entwässerungsergebnis gesteigert.

Nach einem weiteren Merkmal der Erfindung wird der einmal geflockte Schlamm nach der ersten Mischzone in einer Seiheinrichtung oder einer Zentrifuge vorentwässert und das durch die Flockung freigesetzte Wasser abgetrennt. Dann wird die so erzeugte kompakte Masse vor der eigentlichen Entwässerung auf wenigstens einer Siebbandpresse, Kammerfilterpresse, Zentrifuge od.dgl. Entwässerungseinrichtung in der weiteren Mischzone erneut geflockt unter erneutem Zudosieren von Flockungsmitteln wie Polyelektrolyten. Auf diese Weise entsteht wiederum freies Wasser, das vor der Druckentwässerung gesondert abgeschieden zu werden vermag.

Als günstig hat es sich erwiesen, vor die zweite Mischzone einen Zwischenbehälter zu setzen.

Die -- wenigstens -- zwei Mischzonen führen zu einer zweistufigen Freisetzung von Schlammwasser vor der eigentlichen Hauptentwässerung.

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in ihrer einzigen Figur den Verfahrensstammbaum zu einem erfindungsgemäßen Verfahren.

Aus einer nicht wiedergegebenen Kläranlage kommender Dünnschlamm wird durch eine Dünnschlammleitung 10 mittels einer Förderpumpe 12 zu einer Mischzone 14 geführt, in der den Schlammfeststoffen ein diesen gegenüber entgegengesetzt geladenes -- bevorzugt auf Polyacrylamidbasis beruhendes -- Polyelektrolyt zugegeben wird. Dieses gelangt durch eine Zuleitung 16 -- zusammen mit durch eine Zuleitung 18 einfließendem Wasser -- zu einer Polyelektrolytaufbereitung 20 und aus dieser durch eine Zugabeleitung 22 in jene Mischzone 14. In ihr lagern sich die Schlammfeststoffe an den gegensätzlich geladenen Makromolekülen des zudosierten Polyelektrolyten an, und es bilden sich im klaren Wasser schwimmende Wolken oder Flocken.

Der Mischzone 14 ist eine Vorentwässerungseinrichtung 24 in Form einer Seiheinrichtung oder einer Zentrifuge nachgeordnet; in dieser wird das durch Flockung freigesetzte Wasser abgetrennt und bei 26 ausgetragen.

Die so erzeugte kompakte Masse gelangt vor einer weitergehenden Entwässerung durch eine Leitung 28 -- bevorzugt unter Zwischenlagerung in einem Zwischenbehälter 30 -- in eine weitere Mischzone 14ₐ, in der in einem zweiten Schritt nochmals Polyelektrolyt zudosiert wird; die entsprechende Zuführleitung ist mit 20ₐ bezeichnet. Auf diese Weise entsteht wiederum freies Wasser, das vor der weitergehenden Entwässerung in einer -- von Siebbandpresse/n, Kammerfilterpresse/n, Zentrifugen od.dgl. Entwässerungseinrichtung/en gebildeten -- Druckzone 32 abgetrennt werden kann.

Der Feststoffgehalt in einem in einer Austragsleitung 34 der Druckzone 32 weitergeführten Filterkuchen ist gegenüber konventionellen Flockungsverfahren, bei denen an die einzige Mischzone die schlammentwässernde Druckzone anschließt, dank der Wiederholung des Flockungsvorganges und dem darauffolgenden Wasserentzug vor der eigentlichen Druckentwässerung, um etwa 5 % bis 10 % gesteigert.

## Patentansprüche

1. Verfahren zum Entwässern von Schlamm, insbesondere von Abwasser- oder Klärschlamm, bei welchem dem Schlamm in einer Mischzone Flockungsmittel zugesetzt und der geflockte Schlamm anschließend entwässert wird,
dadurch gekennzeichnet,
dass nach dem Flockungsvorgang in der Mischzone (14) und einem Vorentwässern des der Mischzone entnommenen Schlammes diesem in zumindest einer weiteren Mischzone (14ₐ) erneut Flockungsmittel zudosiert wird, wonach der so behandelte Dickschlamm in der Druckzone oder Entwässerungseinrichtung (32) druckentwässert wird.

2. Verfahren nach Anspruch 1, dadurch gekennzeichnet, dass dem Dickschlamm nach der weiteren Mischzone (14ₐ) und vor Eintritt in die Entwässerungseinrichtung (32) klares Wasser entzogen wird.

3. Verfahren nach Anspruch 1 oder 2, dadurch gekennzeichnet, dass der Dickschlamm vor der weiteren Mischzone (14ₐ) zwischengelagert wird.

4. Verfahren nach einem der Ansprüche 1 bis 3, dadurch gekennzeichnet, dass dem Schlamm vor der Entwässerungseinrichtung (32) zumindest zweimal anstehendes Schlammwasser entzogen wird.

5. Anlage zum Entwässern von Schlamm, insbesondere von Abwasser- oder Klärschlamm, bei welchen dem Schlamm in einer Mischzone Flockungsmittel zugesetzt und der geflockte Schlamm anschließend entwässert wird, insbesondere Anlage zur Durchführung des Verfahrens nach einem der voraufgehenden Patentansprüche, dadurch gekennzeichnet, dass zwischen der Mischzone (14) und der Entwässerungseinrichtung (32) zumindest eine weitere Mischzone (14ₐ) angeordnet ist.

6. Anlage nach Anspruch 5, dadurch gekennzeichnet, dass am Ende jeder Mischzone (14, 14ₐ) eine Entnahmeeinrichtung für Schlammwasser vorgesehen ist.

7. Anlage nach Anspruch 5 oder 6, dadurch gekennzeichnet, dass der letzten Mischzone (14ₐ) wenigstens ein Zwischenbehälter (30) vorgeordnet ist.
